# EUROPEAN PATENT APPLICATION

(11) **EP 4 772 298 A1**
(43) Date of publication of application: **08.07.2026**
(21) Application number: 25158707.7
(22) Date of filing: 19.02.2025
(51) Int. Cl.: B23D 45/04, B23D 59/00, B23Q 11/00, B23Q 17/24, F16P 3/14, B27G 19/00

(54) **SAWING DEVICE WITH HAND POSITION DETECTION**

(30) Priority: 03.01.2025 TW 114100344
(71) Applicant: Durq Machinery Corp., Taichung City 429 (TW)
(72) Inventor: HUANG, Yu-Chia, 429 TAICHUNG CITY (TW); CHOU, Fu-Peng, 429 TAICHUNG CITY (TW)
(74) Representative: Straus, Alexander

(57) **Abstract**

A sawing device (10) includes a sawing machine (20), a safety module (40), and a controller (45). The sawing machine (20) has a saw blade (28). The safety module (40) has a positioning marker (41) and a visual element (43) disposed on the same side of the saw blade (28) as the positioning marker (41) and capturing the positioning marker (41) to obtain a relative position between the positioning marker (41) and a center (C) of the saw blade (28) to define a saw blade warning area (W1) based on the relative position. When a hand (50) approaches the sawing machine (20), the visual element (43) detects a position of the hand (50) to define a hand warning area (W2). The controller (45) is electrically connected to a motor (27) and the visual element (43). When the visual element (43) determines that the saw blade warning area (W1) and the hand warning area (W2) partially overlap, the visual element (43) sends a braking signal to the controller (45), causing the controller (45) to stop the motor (27).

## Description

### BACKGROUND OF THE INVENTION

### 1. Field of the Invention

The present invention relates to sawing devices and more particularly, to a sawing device that can detect a position of a hand.

### 2. Description of the Related Art

Due to the high risk of injury to operators during the operation of cutting tools, industry professionals have continuously improved safety mechanisms to enhance operator protection. For example, the machine tool monitoring device disclosed by U.S 8,386,067 utilizes at least one projection unit to define at least one area that needs to be monitored, in order to alert operators that approaching the monitored area could be dangerous. Additionally, the safety system disclosed by US 11,187,378 employs a sensor assembly to monitor a predetermined danger zone near a moving component of a power tool and generate data related to the danger zone. The data generated by the sensor assembly is received and analyzed by a controller to determine whether the operator's hand is within the predetermined danger zone. If the operator's hand is confirmed to be in the danger zone, the controller further sends a signal to the braking system to stop the operation of the moving component of the power tool.

### SUMMARY OF THE INVENTION

It is one objective of the present invention to provide a sawing device, which can enhance operational safety.

To attain the above objective, the sawing device of the present invention comprises a sawing machine, a safety module, and a controller. The sawing machine includes a workbench, a saw blade housing pivotally connected to the workbench, a motor mounted to the saw blade housing, a saw blade connected to the motor to be driven by the motor to rotate and partially received in the saw blade housing to be driven by the saw blade housing to move closer to or farther away from the workbench, and a protective cover pivotally connected to the saw blade housing and covering a part of the saw blade. The safety module includes a positioning marker and a visual element disposed on the same side of the saw blade as the positioning marker. The visual element captures the positioning marker to obtain a relative position between the positioning marker and a center of the saw blade to define a saw blade warning area around the saw blade based on the relative position. When a hand approaches the sawing machine, the visual element detects a position of the hand to define a hand warning area around the hand. The controller is electrically connected to the motor and the visual element for receiving a signal generated by the visual element to stop the motor based on the signal.

It can be seen from the above that when the visual element determines that there is no overlap between the saw blade warning area and the hand warning area, it indicates that there is no risk of the hand being injured by the saw blade. In this case, the controller will maintain the operation of the motor, allowing the saw blade to continue performing the cutting operation. When the visual element determines that the saw blade warning area and the hand warning area partially overlap, it indicates that there is a risk of the hand being injured by the saw blade. In this case, the visual element sends a braking signal to the controller, causing the controller to stop the motor. This can prevent the hand from being injured by the saw blade and enhance the operational safety for the operator.

Preferably, the positioning marker is alternatively attached to the workbench, the saw blade housing, or the protective cover. This ensures that the visual element can accurately capture the positioning marker.

Preferably, the visual element defines the saw blade warning area as follows: a range extending 2 cm to 5 cm radially outward from the teeth of the saw blade, a range extending 2 cm to 5 cm axially outward from both opposite sides of the saw blade, and a range 5 cm to 10 cm in front of the saw blade.

Preferably, the visual element can determine a movement speed of the hand to allow the controller to apply different braking modes to the motor accordingly. When the visual element determines that the movement speed of the hand is close to 100 cm/s, the controller stops the motor when the hand is approximately 10 cm away from the saw blade, and when the visual element determines that the movement speed of the hand is below 100 cm/s, the controller stops the motor when the hand is approximately 2 cm to 5 cm away from the saw blade.

Preferably, the visual element can be assembled together with the sawing machine or installed separately as an independent unit. In the former case, since the installation position of the visual element is fixed, it can directly and clearly capture a complete image of the positioning marker. In the latter case, since there is an angular deviation between the visual element and the positioning marker, the visual element may not be able to capture a complete image of the positioning marker. At this point, the visual element will first capture the lengths of the sides of the positioning marker and calculate the position of the positioning marker based on these side lengths. This allows the visual element to determine the relative position between the center of the positioning saw blade and the positioning marker.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is a perspective view of a sawing device of the present invention.
FIG. 2 is similar to FIG. 1, showing that the positioning marker is attached to the saw blade housing.
FIG. 3 is similar to FIG. 1, showing that the positioning marker is attached to the workbench.

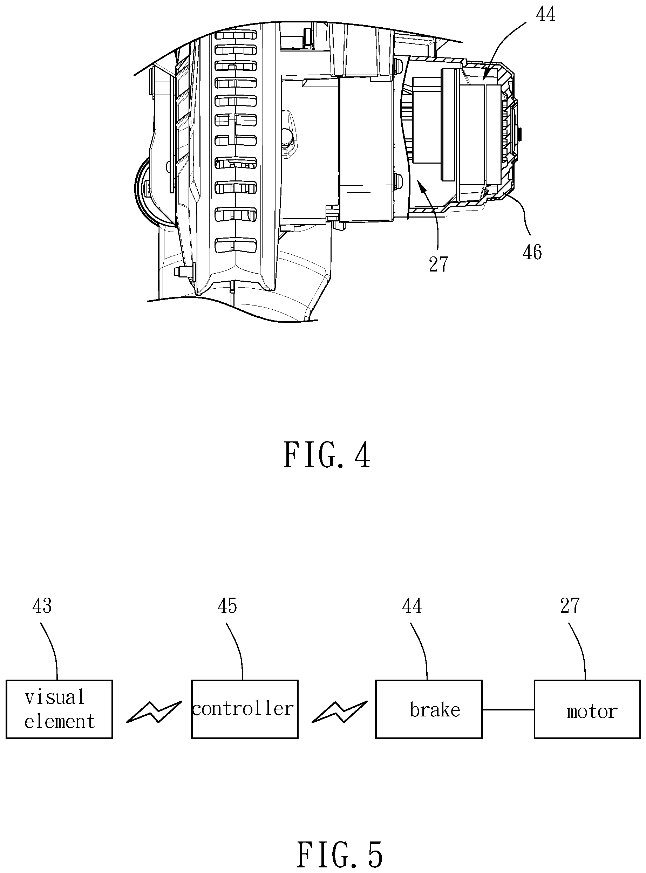

FIG. 4 is a front view of the sawing device of the present invention.
FIG. 5 is a block diagram another perspective view of the sawing device of the present invention.
FIG. 6 is a schematic drawing of the sawing device of the present invention, showing that the visual element defines the saw blade warning area around the saw blade and defines the hand warning area around the hand.
FIG. 7 is a lateral view of FIG. 6.
FIG.8 is a top view of FIG. 6.
FIG.9 is similar to FIG. 7, showing that the saw blade warning area and the hand warning partially overlap.
FIG. 10 is similar to FIG. 8, showing that the saw blade warning area and the hand warning partially overlap.

### DETAILED DESCRIPTION OF THE INVENTION

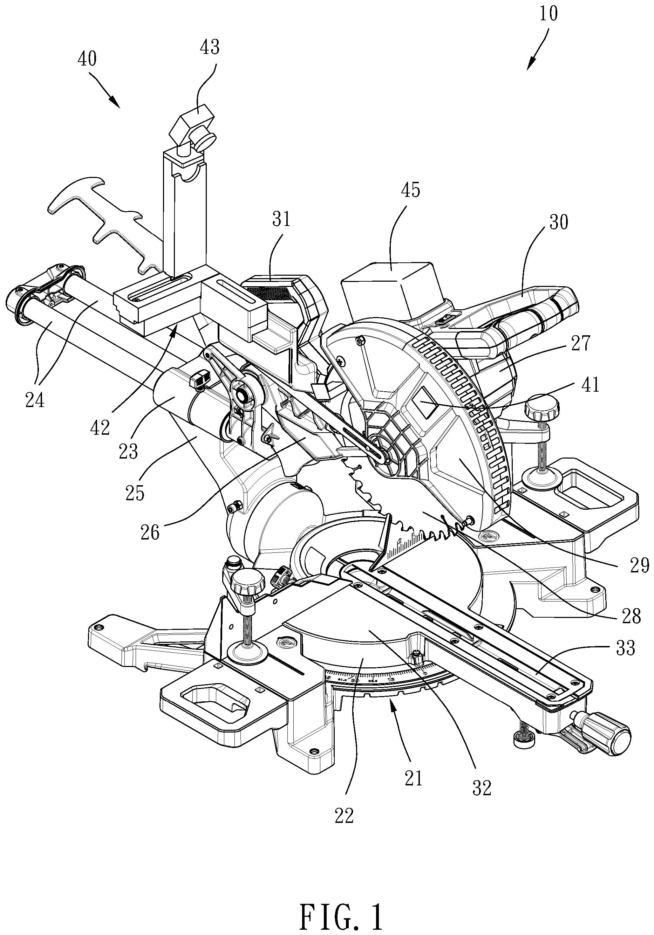

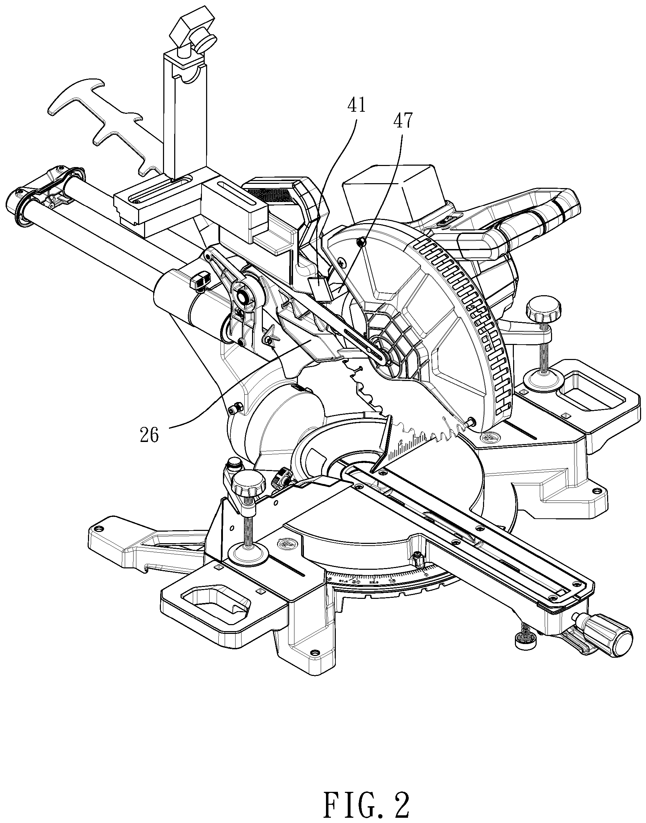

Referring to FIGS. 1 and 2, a sawing device 10 of the present invention comprises a sawing machine 20, a safety module 40, and a controller 45.

The sawing machine 20 can be a miter saw, a band saw, or a table saw. Here, a miter saw is used as an example, but it is not limited to this type. In this embodiment, the sawing machine 20 includes a base 21, a workbench 22, a guide rod seat 23, two guide rods 24, an angel seat 25, a saw blade housing 26, a motor 27, a saw blade 28, a protective cover 29, a grip 30, and a handle 31. The workbench 22 is rotatably mounted to the base 21, including a working surface 32 for supporting a workpiece (not shown) and a slot 33 located on the working surface 32. The guide rod seat 23 is connected to the rear side of the workbench 22. The guide rods 24 are parallel to each other and installed in the guide rod seat 23 in a manner that allows them to move relative to the worktable 22 in a front- and-back direction. The angle seat 25 is connected to the front ends of the guide rods 24 so as to be movable along with the guide rods 24. The saw blade housing 26 is pivotally connected with the angle seat 25, such that the saw blade housing 26 can be rotated relative to the working surface 32 both vertically and horizontally, while also being able to move forward and backward along with the guide rods 24 through the angle seat 25. The motor 27 is assembled with the right side of the saw blade housing 26 for providing power source. The saw blade 28 is connected with the motor 27 and partially received in the saw blade housing 26, such that the saw blade 28 can be driven by the motor 27 to operate, and the saw blade 28 can also be driven by the saw blade housing 26 to move up and down, forward and backward, as well as tilted left and right relative to the working surface 32. The protective cover 29 is pivotally connected with the saw blade housing 26 and covers the lower half of the saw blade 28 when the saw blade 28 is not in use, thereby preventing the saw blade 28 from being exposed when not in operation. The grip 30 is installed on the outer surface of the motor 27 for allowing a user to easily drive the saw blade 28. The handle 31 is installed on the top surface of the saw blade housing 26 for allowing the user to easily lift and transport the entire machine.

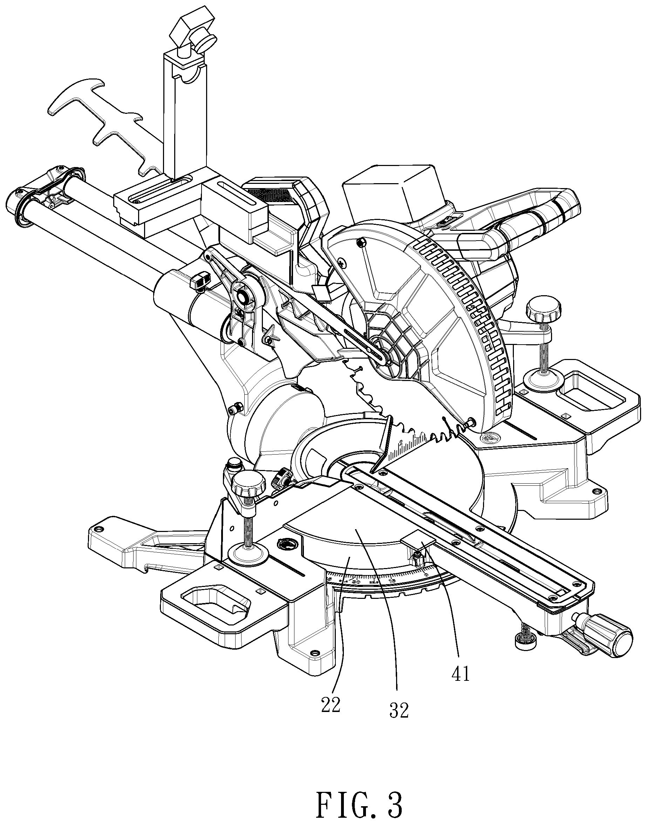

The safety module 40 includes a positioning marker 41, a bracket 42, a visual element 43, a brake 44, and a controller 45. The positioning marker 41 (a QR Code is used in this embodiment) is attached to the left side of the protective cover 29 in this example. However, in fact, the positioning marker 41 can be attached to the left side of the saw blade housing 26 through a mount 47 (as shown in FIG. 2) or attached to the working surface 32 of the workbench 22 (as shown in FIG. 3). The bottom end of the bracket 42 is connected to the left side of the saw blade housing 26, and the top end of the bracket 42 extends to the top of the workbench 22. The visual element 43 (a depth camera is used is used in this embodiment) is installed on the top end of the bracket 42 and located above the workbench 22, such that the visual element 43 and the positioning marker 41 are both located on the left side of the saw blade 28.

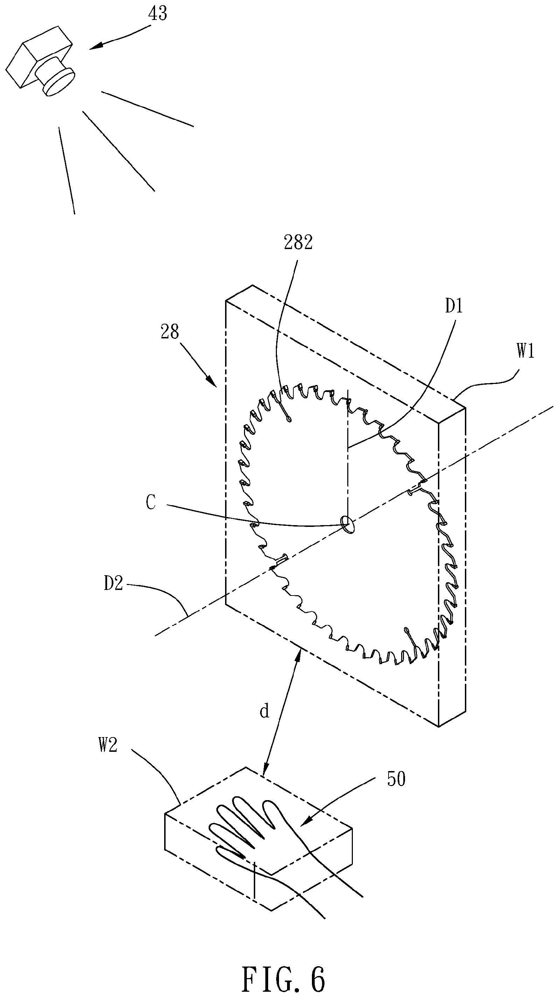

The visual element 43 captures the positioning marker 41 to obtain a relative position between the positioning marker 41 and a center C of the saw blade 28 to define a saw blade warning area W1 (as shown in FIG. 6) around the saw blade 28 based on the relative position. The saw blade 28 can be operated in different ways depending on actual needs, such as moving up and down relative to the worktable 22, moving up and down as well as forward and backward relative to the worktable 22, or tilting at an angle and then moving up and down and forward and backward relative to the workbench 22 according to that angle. Therefore, in this embodiment, the visual element 43 defines the saw blade warning area W1 as follows: a range extending 2 cm to 5 cm outward from the teeth 282 of the saw blade 28 along a radial direction D1 of the saw blade 28, a range extending 2 cm to 5 cm outward from both opposite sides of the saw blade 28 along an axial direction D2 of the saw blade 28, and a range 5 cm to 10 cm in front of the saw blade 28; that is, the saw blade warning area W1 is a three-dimensional virtual space formed around the saw blade 28. Additionally, as shown in FIG. 6, the visual element 43 detects a position of a hand 50 to define a hand warning area W2 around the hand 50. The hand warning area W2 is a three-dimensional virtual space formed around the hand50.

The brake 44 (an electromagnetic brake is used in this embodiment) is assembled with the motor 27 and enclosed together with the motor 27 by an outer casing 46 for stopping the motor 27. The controller 45 is installed behind the grip 30 and electrically connected with the motor 27, the visual element 43, and the brake 44 for receiving a single generated by the visual element 43 and driving the brake 44 to stop the motor 27 based on the single.

Before starting operation, the visual element 43 first captures the positioning marker 41 to locate the position of the saw blade 28, and simultaneously defines the saw blade warning area W1 around the saw blade 28. Next, the visual element 43 captures the position of the hand 50 to define the hand warning area W2 around the hand 50. This allows the relative distance d between the saw blade warning area W1 and the hand warning area W2 to be determined.

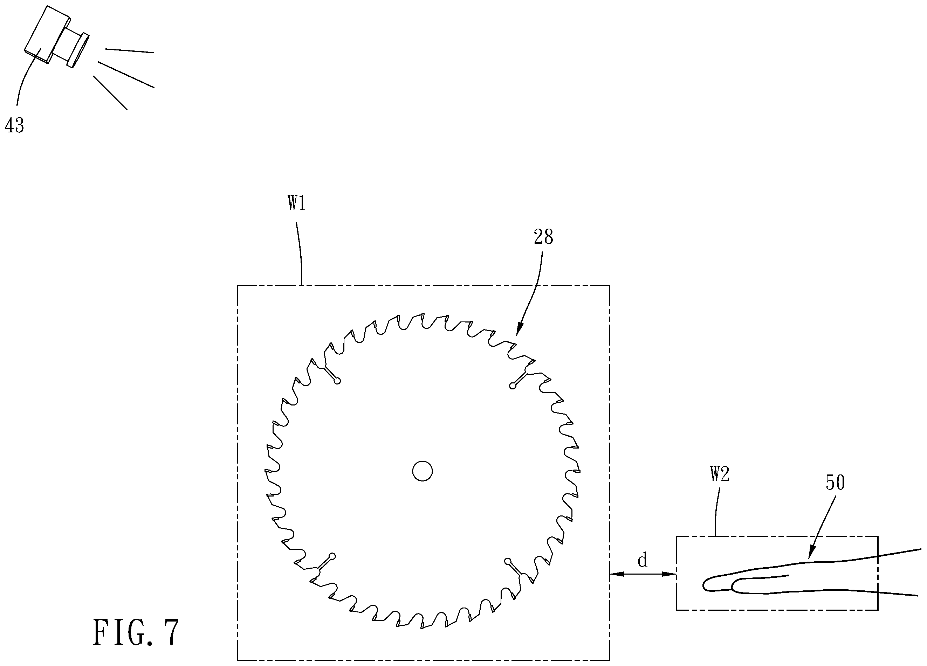

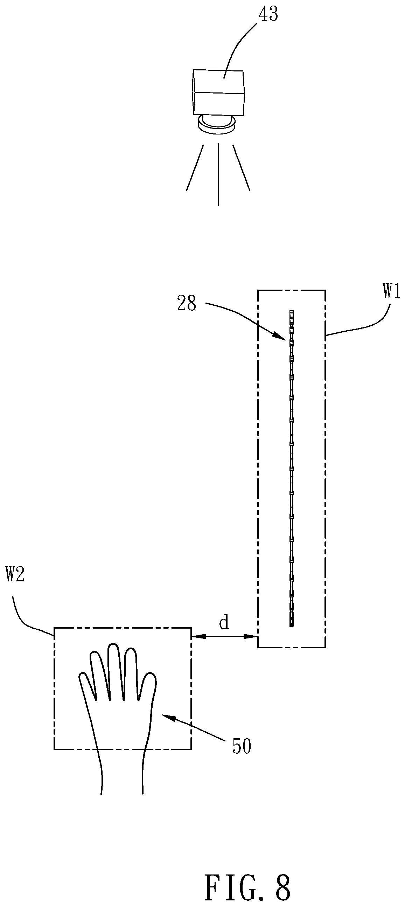

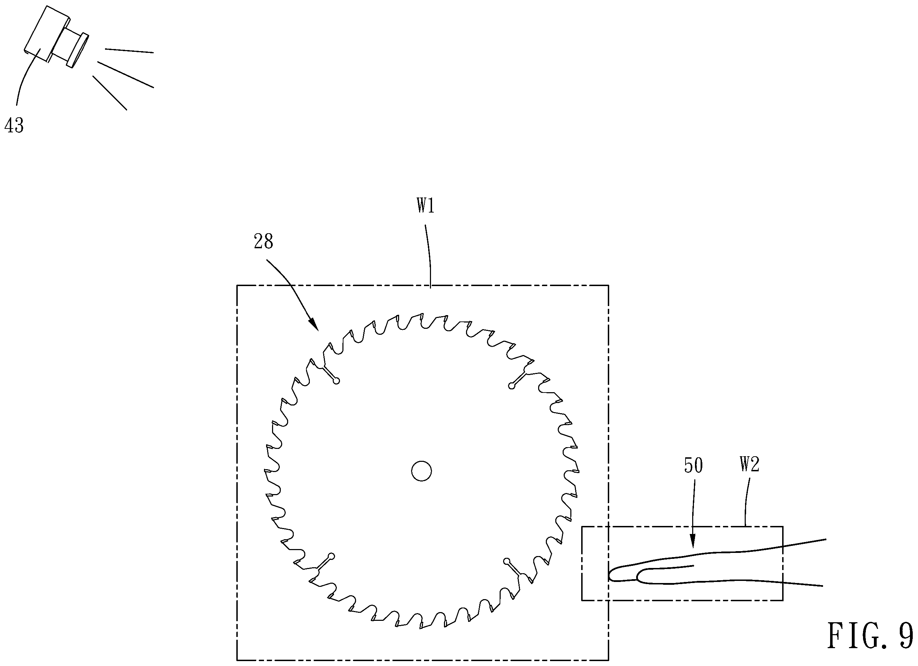

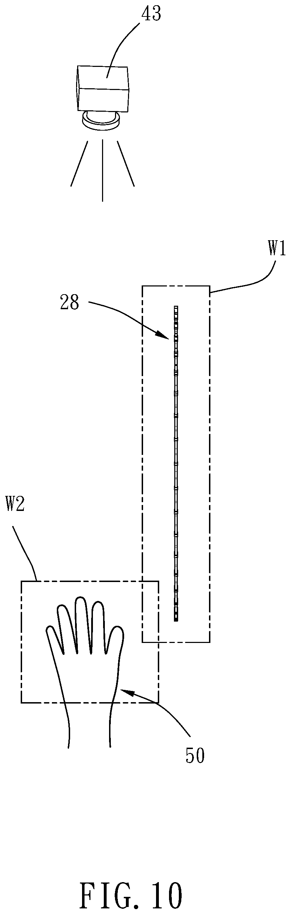

During the operation, when the visual element 43 determines that there is no overlap between the saw blade warning area W1 and the hand warning area W2, as shown in FIGS. 7 and 8, it indicates that there is no risk of the hand 50 being injured by the saw blade 28. In this case, the controller 45 maintains the operation of the motor 27, allowing the saw blade 28 to continue performing sawing operation. Once the visual element 43 determines that the saw blade warning area W1 and the hand warning area W2 partially overlap, i.e., the relative distance d≦0, as shown in FIGS. 9 and 10, it indicates that there is a risk of the hand 50 being injured by the saw blade 28. At this point, the visual element 43 sends a braking signal (which can be transmitted via either wired or wireless transmission) to the controller 45, causing the controller 45 to drive the brake 44 to stop the motor 27. This can prevent the hand 50 from being injured by the saw blade 28 and enhance the operational safety for the operator.

Additionally, even when there is no overlap between the saw blade warning area W1 and the hand warning area W2, the visual element 43 still determines whether the hand 50 is at risk of being injured by the saw blade 28 based on the movement speed of the hand 50. The visual element 43 then sends a brake signal to the controller 45. Furthermore, for example, if the hand 50 can move 10 cm in 0.1 seconds, meaning the preset speed of the hand 50 is 100 cm/s, when the visual element 43 detects that the movement speed of the hand 50 is approaching this preset speed, the controller 45 will activate the brake 44 to stop the motor 27 when the hand 50 is about 10 cm away from the saw blade 28. Conversely, if the visual element 43 detects that the movement speed of the hand 50 is below the preset speed, the controller 45 will activate the brake 44 to stop the motor 27 when the hand 50 is about 2 cm to 5 cm away from the saw blade 28.

What needs to be supplemented here is that the visual element 43 does not necessarily have to be mounted on the sawing machine 20 through the bracket 42. The visual element 43 can also be set up independently and separately from the sawing machine 20. In this case, since there may be angular deviations between the visual element 43 and the positioning marker 41, the visual element 43 may not be able to capture a complete image of the positioning marker 41. Therefore, the visual element 43 first captures the lengths of the sides of the positioning marker 41 and then calculates the position of the positioning marker 41 based on these side lengths. This allows the visual element 43 to obtain a complete image of the positioning marker 41. In this way, the relative position between the center C of the saw blade 28 and the positioning marker 41 can be determined, which then allows for the definition of the saw blade warning area W1.

As indicated above, the sawing device 10 of the present invention uses the visual element 43 to determine whether the saw blade warning area W1 and the hand warning area W2 overlap. Once there is any overlap between the two areas, the controller 45 will stop the operation of the motor 27 through the brake 44 to prevent the hand 50 from being injured by the saw blade 28, thereby enhancing operational safety.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A sawing device (10) **characterized in that** comprising:
a sawing machine (20) including a workbench (22), a saw blade housing (26) pivotally connected to the workbench (22), a motor (27) mounted to the saw blade housing (26), a saw blade (28) connected to the motor (27) to be driven by the motor (27) to rotate and partially received in the saw blade housing (26) to be driven by the saw blade housing (28) to move closer to or farther away from the workbench (22), and a protective cover (29) pivotally connected to the saw blade housing (26) and covering a part of the saw blade (28);
a safety module (40) including a positioning marker (41) and a visual element (43) disposed on the same side of the saw blade (28) as the positioning marker (41), the visual element (43) capturing the positioning marker (41) to obtain a relative position between the positioning marker (41) and a center (C) of the saw blade (28) to define a saw blade warning area (W1) around the saw blade (28) based on the relative position, the visual element (43) detecting a position of a hand (50) to define a hand warning area (W2) around the hand (50) when the hand (50) approaches the sawing machine (20); and
a controller (45) electrically connected to the motor (27) and the visual element (43);
wherein when the visual element (43) determines that the saw blade warning area (W1) and the hand warning area (W2) partially overlap, the visual element (43) sends a braking signal to the controller (45), causing the controller (45) to stop the motor (27).

2. The sawing device (10) as claimed in claim 1, **characterized in that** the positioning marker (41) is alternatively attached to the workbench (22), the saw blade housing (26), or the protective cover (29).

3. The sawing device (10) as claimed in claim 1 or 2, **characterized in that** the visual element (43) defines the saw blade warning area (W1) as follows: a range extending 2 cm to 5 cm radially outward from teeth (282) of the saw blade (28), a range extending 2 cm to 5 cm axially outward from both opposite sides of the saw blade (28), and a range 5 cm to 10 cm in front of the saw blade (28).

4. The sawing device (10) as claimed in one of claims 1 to 3, **characterized in that** when the visual element (43) determines that a movement speed of the hand (50) is close to 100 cm/s, the controller (45) stops the motor (27 when the hand (50) is approximately 10 cm away from the saw blade (28), and when the visual element (43) determines that the movement speed of the hand (50) is below 100 cm/s, the controller (45) stops the motor (27) when the hand (50) is approximately 2 cm to 5 cm away from the saw blade (28).

5. The sawing device (10) as claimed in claim 1, **characterized in that** the visual element (43) is mounted on a bracket (42) attached to one side of the saw blade housing (26) and positioned above the workbench (22).

6. The sawing device (10) as claimed in claim 1 or 5, **characterized in that** the visual element (43) and the sawing machine (20) are separately and independently installed.

7. The sawing device (10) as claimed in claim 6, **characterized in that** the visual element (43) captures lengths of sides of the positioning marker (41) to obtain the relative position between the positioning marker (41) and the center (C) of the saw blade (28).

8. The sawing device (10) as claimed in one of claims 1 to 7, **characterized in that** comprising a brake (44) installed on the motor (27) and electrically connected to the controller (45); when the visual element (43) sends the brake signal to the controller (45), the brake (44) is driven by the controller (45) to stop the motor (27).
